# EUROPEAN PATENT APPLICATION

(11) **EP 0 536 722 A2**
(43) Date of publication of application: **14.04.1993**
(21) Application number: 92117122.9
(22) Date of filing: 07.10.1992
(51) Int. Cl.: H04N 7/00, H04N 5/44

(54) **A method to increase the field rate of a picture generated from an HDTV signal arriving in the form of a sample sequence**

(30) Priority: 10.10.1991 FI 914783
(71) Applicant: SALORA OY, SF-241 01 Salo (FI)
(72) Inventor: Lehtonen, Arto, SF-33700 Tampere (FI)
(74) Representative: Goddar, Heinz J., Dr.

(57) **Abstract**

In a HDTV decoder the picture signal arriving in the form of a sample sequence in the format 625/2:1/5 Hz is directed to field memories, from which it is read to the sub-sampling restorer SSPC (33). The sub-sampling patterns are further supplied into three parallel signal processing branches (34, 35, 36), of which each generates a complete high definition television picture of the sub-sampling patterns. According to the invention the picture signal is directed by a controllable switch (C5) to at least four field memories (a, b, c, d). The contents of each field memory (a, b, c, d) is read to the sub-sampling restorer SSPC (33) at the double writing rate, whereby the field rate is increased to 100 Hz.

## Description

The invention relates to a high definition television, HDTV receiver and more particularly to a method to increase the scanning rate over the original rate for a picture processed from a received HDTV signal.

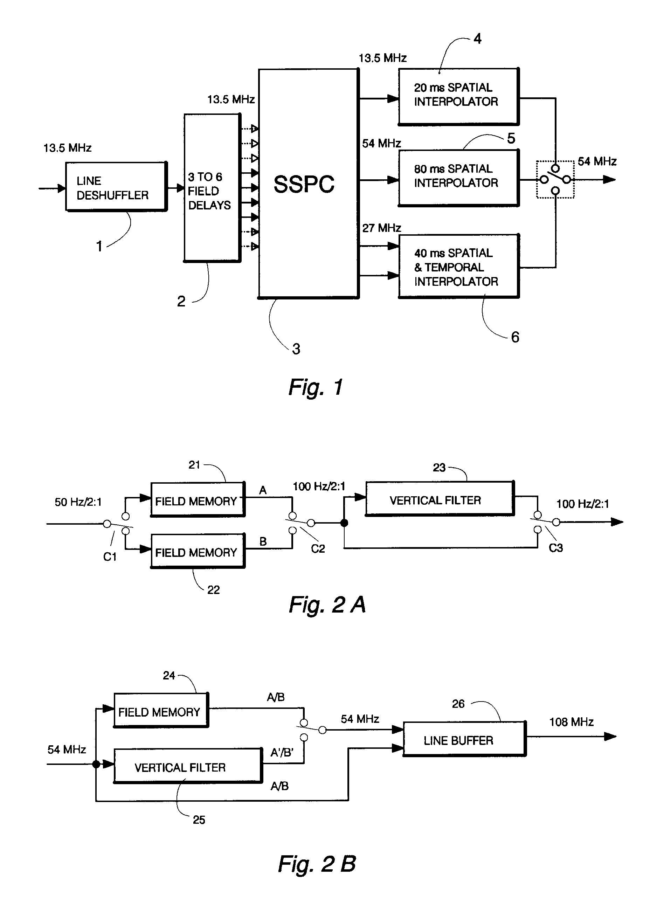

The European High Definition Television, HDTV, is transmitted via satellite or cable using the MAC system, which is incompatible with all traditional television systems. Therefore the present receivers require a special decoder in order to receive a MAC transmission. In the MAC decoder of the receiver the received compressed picture 625/2:1/50 Hz must be restored into the original HDTV format or 1250/2:1/50 Hz. In the decoder the received analog television signal is converted into video, data and voice signals. The decoder could be called a bandwidth restoration decoder (BRD) and below it is briefly described with reference to figure 1. The description refers to the luminance signal. The received sampling frequency is 13,5 MHz and the output frequency of the BRD is 54 MHz. The coder comprises a "line deshuffler" block 1; from 3 to 6 field delays which can be field memories 2, e.g. coupled in a cascade; a sub-sampling converter 3; and three interpolator branches 4, 5 and 6. Because the transmission has a reduced line rate the received samples must be shifted so that the original line rate is obtained. This function is performed in block 1. After the deshuffling function the luminance signal is delayed in the field delays 2. The field signals are then processed in the SSPC 3 (Sub-Sample Pattern Converter), which reads the field memory contents at a frequency of 13,5 MHz and reconstructs the original sub-sampled patterns. The sub-sampled patterns are supplied from the converter 3 to the branches 4, 5 and 6, in which the original complete HDTV fields are generated by interpolation. Controlled by the motion information added to the transmitted signal, the switch C connects one branch at a time to the output of the BRD, which then produces the original HDTV picture in the format 1250/2:1/50 Hz.

The signal from the BRD is further processed to increase its scanning rate, because a low field rate causes detrimental white-field flicker and the 2:1 interleaving causes line flicker, which can be eliminated by increasing the scanning rate. There are two basic methods to increase the scanning rate. The field rate could be increased e.g. to 100 Hz, whereby the format is 2:1/100 Hz, or the interleaving could be eliminated, i.e. the picture is converted into a progressive picture e.g. in the format 1:1/50 Hz. Increasing the field rate to 100 Hz depends on the motion contents of the picture. For stationary pictures we can simply use a field shifting so that when the original picture AB is formed by the odd line field A and the even line field B (duration 20 ms), then the picture is instead scanned twice within the same period, i.e. as ABAB (the field duration is now 10 ms). Pictures containing motion are processed so that a new field A' and B' is interpolated from the original field lines for each original field A and B, whereby the new picture is AA'B'B. The above presented methods to increase the field rate are realized by the circuits in figures 2A and 2B. According to figure 2A the input odd fields A and even fields B are supplied to own field memories 21, 22 by controlling the switch C1 at the frequency 50 Hz. Stationary pictures are duplicated by reading the memories with the double frequency (100 Hz) and supplying the signal directly to the output, thereby providing the picture ABAB and the field rate is 100 Hz. When moving objects are represented, then the contents of the memories 21 and 22 are supplied to the vertical filter 23, which interpolates the new fields A' and B' within the field. A suitable control of the switches C2 and C3 produces an output AA'B'B. Thus the circuit requires two field memories for luminance processing. The chrominance processing can be realized by a simple field duplicating method AABB. The picture is converted into a progressive picture so that in stationary pictures the pictures are formed of consecutive odd and even fields. When two consecutive original pictures are A1B1, A2B2 (A contains the odd lines, B contains the even lines), then the consecutive progressive pictures are A1B2, A1B1, A2B1, A2B2, and each picture is scanned in one sweep. In pictures containing motion a progressive picture is formed using interpolation within the field so that the above presented two consecutive pictures are displayed as four consecutive pictures A1A1', B1B1', A2A2', B2B2', in which the lines marked with an apostrophe are interpolated from the respective field. Figure 2B shows a circuit for converting a picture into a progressive one. Both the A-fields and the B-fields are supplied to the field delay 24, which is used for the processing of stationary pictures, and to the vertical filter 25, which is used for pictures containing motion. The switch C4 selects the method to be used in accordance with the motion in the picture. Two fields are interlaced in the buffer 26, whereby one picture is obtained.

The above presented BRD-part and the scanning rate conversion SRC of prior art high definition television have some disadvantages. The major disadvantage is that the receiver requires a high number of expensive HDTV field memories. This disadvantage can be eliminated according to claim 1 so that after the line "deshuffler" function the lines of at least four consecutive fields are directed by a controllable switch to the field memories so that all samples of one field are written into one field memory. Preferably there are at least four field memories, but there may more of them. The fields which have a field rate of 50 Hz are read from the memories to the sub-sampling restorer SSPC at the double rate, whereby the field rate is increased to 100 Hz. Only small functional changes are required in the prior art SSPC and the signal processing branches after it. The signal processing branches produce an HDTV picture in the format 1250/2:1/50 Hz.

The invention is described and further illustrated with the aid of the enclosed schematic figures, where
figure 1 shows the block diagram of the decoder in an HDTV receiver;
figure 2A shows a method to double the field rate;
figure 2B shows the conversion of a picture to a progressive one; and
figure 3 shows a decoder according to the invention and the doubling of the field rate.

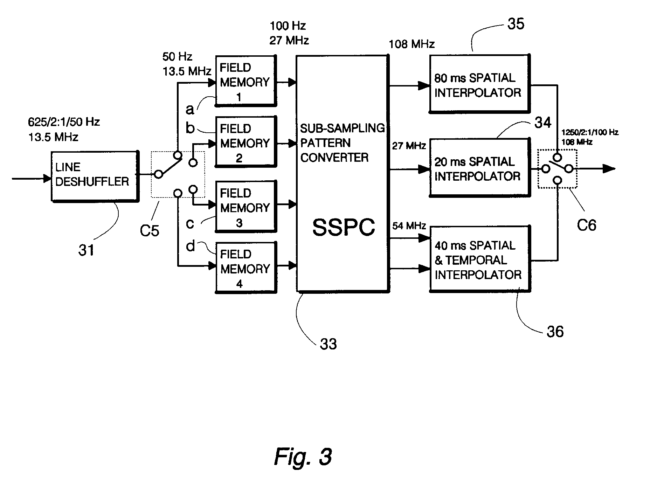

The figures 1 and 2 were described above in connection with the description of prior art. The circuit of figure 3 used in the invention has an arrangement of the field memories differing from that of figure 1. Four field memories a, b, c and d are coupled in parallel so that the output signal of the line deshuffler circuit 31 is connected by the switch C5 only to one field memory input at a time. The format of the signal written into the field memories is 625/2:1/5 Hz, or 625 lines, interlaced scanning, 50 Hz field rate. The field memories are written at the frequency 13,5 Mhz. The fields are written into the memories a - d, preferably so that each memory will contain the lines of one field, whereby e.g. the memory a will contain the odd field A1 of the first picture, the memory b will contain the even field B1 of this picture, the memory c will contain the odd field A2 of the next picture and the memory d will contain the even field B2 of this picture. It must be noted that when a field is written into memory it is possible to write into any field memory. Thus the field A1 could as well be written into the memories b, c or d. This is true for all fields to be written. Then the lines are read from the memories at a frequency, which is the double writing frequency, in this case at the frequency 27 MHz, this causing the fields to be supplied to the SSPC-block at the frequency 100 Hz. Thus the field rate is increased to 100 Hz already before the actual picture processing.

When the field rate is doubled already before the SSPC 33, this implies that the SSPC which restores the originally transmitted sub-sampled patterns also produces each sub-sampled field and picture twice during 20 ms, compared to the prior art method where the generation of one sub-sampled pattern requires 20 ms. The picture processing branches 34, 35, 36 now must generate the alternating even and odd fields. In the 80 ms branch 35, which processes stationary pictures, it is rather easy to generate the odd and even fields from the same sub-sampled pictures, but the 20 ms branch 34 and the 40 ms branch 36 for processing pictures containing motion must use filtering within a field, which converts odd fields into even fields and vice versa. The algorithms used in the branches are not included in the scope of this invention, and any suitable method could be used there.

Complete orthogonal HDTV pictures in the format 1250/2:1/50 Hz are generated in the picture processing branches 34, 35 and 36, i.e. the finished interlaced pictures with 1250 lines and with a field rate of 100 Hz. In accordance with the motion information contained in the received signal the switch C6 in a known way connects one branch at a time to the decoder output, either for further processing or to be connected to the display.

The principle to increase the field rate is described above, using as an example the rate increase from 50 Hz to 100 Hz. The same principle can be used when the field rate is converted to 75 Hz. Then the memories are read at a rate only 25 % lower than in the case of 100 Hz.

The method according to the invention requires 9,6 Mbit memory. Motion compensation can be added to the method without using more field memories, because the field rate conversion vectors are sent in the DATV-signal (Digital Assisted Television). The method is applicable both to luminance and chrominance signals.

The features disclosed in the foregoing description, in the claims and/or in the accompanying drawings may, both, separately and in any combination thereof, be material for realising the invention in diverse forms thereof.

## Claims

1. A method to increase the field rate of a picture in high definition television, in which the picture signal arriving in the form of a sample sequence in the format 625/2:1/5 Hz is directed to field memories, from which it is read to the sub-sampling restorer SSPC (33) generating the originally transmitted sub-sampling patterns to be further supplied into three parallel signal processing branches (34, 35, 36), of which each generates a complete high definition television picture of the sub-sampling patterns, a switch (C6) connecting one branch at a time for further processing in accordance with the motion information (DATV) contained in the received signal, **characterized** in that
- the picture signal is directed by a controllable switch (C5) to field memories (a, b, c, d) so that the all samples of one field are written into one field memory,
- the contents of each field memory (a, b, c, d) is read to the sub-sampling restorer SSPC (33) at a higher rate than the writing rate, whereby the field rate is increased correspondingly.

2. Method according to claim 1, **characterized** in that there are four field memories.

3. Method according to claim 1, **characterized** in that the contents of each field memory (a, b, c, d) is read at the double writing rate, whereby the field rate is increased to the value 100 Hz.

4. Method according to claim 1, **characterized** in that the contents of each field memory (a, b, c, d) is read at a rate that is 1,5 times the writing rate, whereby the field rate is increased to the value 75 Hz.
